(19) Europäisches Patentamt / European Patent Office / Office européen des brevets

(11) **EP 3 924 635 B1**

(12) **FASCICULE DE BREVET EUROPEEN**

(45) Date de publication et mention de la délivrance du brevet:
**18.01.2023 Bulletin 2023/03**

(21) Numéro de dépôt: **20725803.9**

(22) Date de dépôt: **02.03.2020**

(51) Classification Internationale des Brevets (IPC):
**F16D 55/226** (2006.01)   **B60T 13/66** (2006.01)
**B60T 13/74** (2006.01)   **H02P 29/60** (2016.01)

(52) Classification Coopérative des Brevets (CPC):
**B60T 13/662; B60T 13/741; F16D 55/226;**
**H02P 23/14; H02P 29/60**

(86) Numéro de dépôt international:
**PCT/FR2020/050411**

(87) Numéro de publication internationale:
**WO 2020/188175 (24.09.2020 Gazette 2020/39)**

(54) **ESTIMATION DE LA TEMPERATURE D'UN MOTEUR ELECTRIQUE D'ACTIONNEUR DE FREIN DE VEHICULE ET COMMANDE DU MOTEUR**

SCHÄTZUNG DER TEMPERATUR EINES ELEKTROMOTORS EINES FAHRZEUGBREMSAKTUATORS UND STEUERUNG DES MOTORS

ESTIMATION OF THE TEMPERATURE OF AN ELECTRIC MOTOR OF A VEHICLE BRAKE ACTUATOR, AND CONTROL OF THE MOTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.03.2019 FR 1902761**

(43) Date de publication de la demande:
**22.12.2021 Bulletin 2021/51**

(73) Titulaire: **Hitachi Astemo France**
**93700 Drancy (FR)**

(72) Inventeurs:
• **WITTE, Lennart**
  **67000 STRASBOURG (FR)**
• **PATRÃO CARQUEIJÓ, Alex**
  **93500 PANTIN (FR)**

(74) Mandataire: **Brevalex**
**Tour Trinity**
**1 Bis Esplanade de La Défense**
**CS 60347**
**92035 Paris La Défense Cedex (FR)**

(56) Documents cités:
**DE-A1-102006 052 810    DE-A1-102009 001 258**
**DE-A1-102012 205 030**

## Description

### DOMAINE TECHNIQUE

L'invention se rapporte aux freins pour véhicule. Elle concerne plus précisément la commande d'un actionneur électromécanique de frein, à partir de la température d'un moteur de l'actionneur.

### ÉTAT DE LA TECHNIQUE ANTÉRIEURE

Des freins à étrier flottant comprennent un actionneur électromécanique qui est raccordé à l'étrier. L'actionneur électromécanique comprend un moteur électrique.

Certains de ces freins sont équipés d'un capteur de température. Le moteur de l'actionneur est alors commandé en tenant compte de la température du moteur. L'effort de freinage qui est exercé par le frein tend alors à être plus précis.

Il existe un besoin pour limiter l'influence de la température du moteur sur les performances de freinage, notamment en l'absence de capteur de température du frein.

DE 10 2006 052810, DE 10 2012 205030 et DE 10 2009 001258 divulguent des procédés de commande d'un frein connus de l'état de la technique.

### EXPOSÉ DE L'INVENTION

A cet égard, l'invention a pour objet un procédé de commande d'un frein de véhicule, le frein comprenant un actionneur électromécanique qui comporte un moteur électrique. Le procédé de commande comprend la commande de l'actionneur à partir de la température estimée du moteur, la température du moteur étant estimée à partir de la constante du moteur et de la résistance ohmique du moteur.

Selon l'invention, le procédé de commande du frein comprend une étape de détermination d'un premier coefficient correctif de température du moteur, à partir d'une première fonction qui est représentative d'un rapport d'une vitesse angulaire du moteur sur l'intensité d'alimentation du moteur en fonction de la tension d'alimentation du moteur.

En plus ou en variante, le procédé de commande du frein comprend une étape de détermination d'un deuxième coefficient correctif de température du moteur, à partir d'une deuxième fonction qui est représentative d'un rapport de la résistance ohmique du moteur sur la constante du moteur en fonction de la température du moteur.

Grâce à l'estimation de la température du moteur électrique, au premier coefficient correctif de température et/ou au deuxième coefficient correctif de température, l'influence de la température du moteur électrique sur les performances de freinage est limitée, y compris en l'absence de capteur de température du frein.

Le moteur électrique et plus généralement l'actionneur sont commandés en tenant compte de la température estimée du moteur électrique. L'effort de freinage qui est exercé par le frein est aussi estimé plus précisément en tenant compte de la température du moteur électrique, notamment par l'intermédiaire du premier coefficient correctif de température et/ou du deuxième coefficient correctif de température.

Par conséquent, la masse, la puissance et le coût de l'actionneur électromécanique de frein peuvent être limités. Le freinage tend à être plus efficace en commandant plus précisément l'effort de freinage qui est exercé par le frein.

L'invention peut comporter de manière facultative une ou plusieurs des caractéristiques suivantes combinées entre elles ou non.

Selon une particularité de réalisation, le procédé de commande comprend la commande du moteur pour que le frein exerce un effort de freinage selon une consigne de freinage, l'effort de freinage exercé par le frein étant estimé à partir de la température du moteur.

Selon une particularité de réalisation, l'effort de freinage exercé par le frein est estimé à partir du premier coefficient correctif et/ou du deuxième coefficient correctif.

Selon une particularité de réalisation, la première fonction et/ou la deuxième fonction sont conçues pour être linéaires.

Selon une particularité de réalisation, la constante du moteur et/ou la résistance ohmique du moteur sont estimées à partir de la tension d'alimentation du moteur et de l'intensité d'alimentation du moteur.

L'invention porte également sur un dispositif de commande d'un frein de véhicule, le frein comprenant un actionneur électromécanique qui comporte un moteur électrique. Le dispositif de commande est configuré pour commander l'actionneur électromécanique à partir de la température du moteur électrique de l'actionneur, la température du moteur étant estimée à partir de la constante du moteur et de la résistance ohmique du moteur.

Selon l'invention, le dispositif de commande est configuré pour déterminer un premier coefficient correctif de température du moteur, à partir d'une première fonction qui est représentative d'un rapport d'une vitesse angulaire du moteur sur l'intensité d'alimentation du moteur en fonction de la tension d'alimentation du moteur.

En plus ou en variante, le dispositif de commande est configuré pour déterminer un deuxième coefficient correctif de température du moteur, à partir d'une deuxième fonction qui est représentative d'un rapport de la résistance ohmique du moteur sur la constante du moteur en fonction de la température du moteur.

L'invention porte aussi sur un frein de véhicule motorisé, le frein comprenant un actionneur électromécanique et un dispositif de commande tel que défini ci-dessus. Le dispositif de commande est configuré pour commander l'actionneur du frein.

Selon une particularité de réalisation, le dispositif de commande est configuré pour commander le moteur pour que le frein exerce un effort de freinage selon une consigne de freinage, l'effort de freinage exercé par le frein étant estimé à partir de la température du moteur.

## BRÈVE DESCRIPTION DES DESSINS

La présente invention sera mieux comprise à la lecture de la description d'exemples de réalisation, en référence aux dessins annexés sur lesquels :

- la figure 1 est une représentation schématique partielle d'un frein de véhicule, selon un premier mode de réalisation de l'invention ;
- la figure 2 est une représentation schématique partielle de l'actionneur et d'un dispositif de commande de l'actionneur, selon le premier mode de réalisation de l'invention ;
- la figure 3 est une représentation schématique partielle du dispositif de commande de l'actionneur, selon le premier mode de réalisation ;
- la figure 4 est une représentation graphique schématique partielle d'un rapport d'une vitesse angulaire du moteur sur une intensité alimentant le moteur, en fonction d'une tension d'alimentation du moteur ;
- la figure 5 est une représentation graphique schématique partielle d'un rapport d'une résistance ohmique du moteur sur une constante du moteur, en fonction d'une température du moteur ;
- la figure 6 illustre le procédé de commande de frein, selon le premier mode de réalisation.

## EXPOSÉ DÉTAILLÉ DE MODES DE RÉALISATION PARTICULIERS

Des parties identiques, similaires ou équivalentes des différentes figures portent les mêmes références numériques de façon à faciliter le passage d'une figure à l'autre.

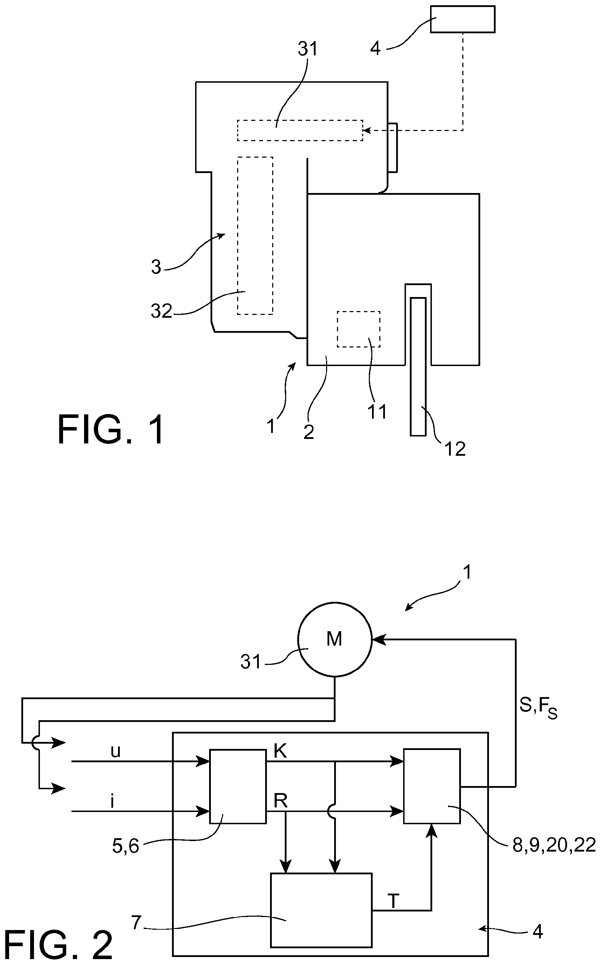

La figure 1 représente un frein à disque 1 pour un véhicule automobile. Le frein à disque 1 comporte un étrier 2 avantageusement de type flottant, une chape (non représentée), un actionneur électromécanique 3, deux patins (non représentés) et un disque 12. Le frein 1 comporte aussi un piston 11 et un dispositif de commande 4 de l'actionneur. Le frein 1 est notamment un frein de stationnement.

Dans une première variante de réalisation, le frein selon la présente invention comporte un actionneur hydraulique (typiquement cylindre/piston) pour le frein de service et un actionneur électromécanique pour le frein de parking et/ou de secours. Dans une deuxième variante de réalisation, tous les actionneurs du frein sont électriques ou électromécaniques. Avantageusement un unique actionneur électromécanique assure le freinage de service de parking et/ou de secours.

Le piston 11 est logé dans l'étrier 2. Il est mobile en translation relativement à l'étrier 2, pour entrainer le rapprochement des patins (non représentés) qui enserrent le disque 12 lors du freinage.

L'actionneur électromécanique 3 est raccordé à l'étrier 2. L'actionneur électromécanique 3 comprend un moteur électrique 31, un dispositif de transmission 32 et un boitier 34 qui loge le moteur 31 et le dispositif de transmission 32.

Le fonctionnement du moteur 31 est décrit par les cinq équations ci-dessous :

$$(1) \qquad L\frac{di(t)}{dt} = -Ri(t) - K\omega(t) + u(t)$$

$$(2) \qquad J\frac{d\omega(t)}{dt} = Ki(t) - M_L(t)$$

$$(3) \qquad M_L(t) = M_F + M_C(t)$$

$$(4) \qquad \frac{dS(t)}{dt} = \gamma\omega(t)$$

$$(5) \qquad u(t) = Ri(t) + K\omega(t)$$

Dans ces équations, u représente la tension d'alimentation du moteur, i représente l'intensité d'alimentation du moteur, L représente l'inductance du moteur, R représente la résistance ohmique du moteur, K représente la constante du moteur, J représente le moment d'inertie du moteur, $\omega$ représente la vitesse angulaire du moteur, $M_L$ représente le couple de sortie du moteur, $M_c$ représente le couple de chargement du moteur, $M_F$ représente le couple de frottement du moteur, et S représente le déplacement du piston.

Le dispositif de transmission 32 est raccordé au piston 11. Il comprend une pluralité d'éléments de transmission du mouvement tels que des roues dentées. Le dispositif de transmission 32 est configuré pour déplacer le piston 11, lorsqu'il est entraîné par le moteur 31.

Le dispositif de commande 4 comprend au moins une unité de commande. Le dispositif de commande 4 commande le fonctionnement du moteur 31, par exemple par l'intermédiaire d'un réseau de transmission de données, d'une liaison sans fil ou d'un câble d'alimentation électrique. Le dispositif de commande 4 est adapté au type de moteur 31 employé (moteur avec balai et/ou moteur sans balai ou analogue). Il comporte avantageusement des moyens de commutation comportant par exemple des transistors de puissance ou analogue avantageusement commandés par un calculateur numérique.

Dans le mode de réalisation représenté, chaque unité de commande est située à l'extérieur du boitier 34 de l'actionneur. Chaque unité de commande comprend par exemple une unité de calcul. L'unité de calcul est par exemple constituée par le calculateur du dispositif de stabilité du véhicule, par exemple connu sous la marque « ESP », d'un calculateur central dédié au freinage, d'un calculateur numérique partagé avec d'autres fonctions du véhicule et/ou d'un calculateur intégré au frein 1.

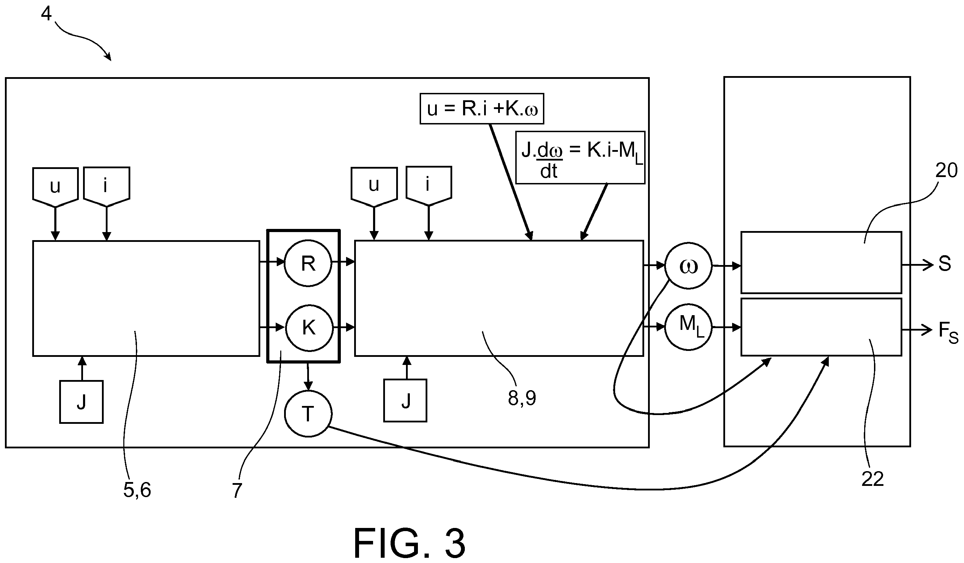

En référence conjointe aux figures 2 et 3, le dispositif de commande 4 comprend un dispositif 5 d'estimation de la résistance du moteur, un dispositif 6 d'estimation de la constante du moteur, un dispositif 7 d'estimation de la température du moteur, un dispositif 8 d'estimation de la vitesse angulaire du moteur, un dispositif 9 d'estimation du couple de sortie du moteur, un dispositif 20 d'estimation de déplacement du piston, et un dispositif 22 d'estimation de l'effort de freinage.

En référence conjointement aux figures 2 et 3, le dispositif de commande 4 est configuré pour commander l'actionneur électromécanique 3, à partir de la température T du moteur électrique de l'actionneur qui est estimée par le dispositif 7 d'estimation de la température.

Le dispositif 7 d'estimation de la température est configuré pour estimer la température T du moteur 31, à partir de la constante K du moteur et de la résistance ohmique R du moteur. En particulier, la constance K du moteur tend à diminuer lorsque la température T du moteur augmente. La résistance ohmique R du moteur tend à augmenter lorsque la température T du moteur augmente.

La constante K du moteur et la résistance ohmique R sont par ailleurs susceptibles de varier avec le vieillissement du moteur électrique 31. Le dispositif 5 d'estimation de résistance est configuré pour estimer la résistance ohmique R du moteur électrique, à partir de la tension d'alimentation u du moteur et de l'intensité d'alimentation i du moteur. Le dispositif 6 d'estimation de la constante du moteur est configuré pour estimer la constante K du moteur électrique, à partir de la tension d'alimentation u du moteur et de l'intensité d'alimentation i du moteur. La valeur du moment d'inertie J du moteur est connue lors de la détermination de la constante K et de la résistance ohmique du moteur.

La constante K du moteur et la résistance ohmique R du moteur sont par exemple estimées en deux étapes à l'aide de la méthode d'estimation qui est divulguée dans la demande de brevet US 2016/0103430 au moyen des cinq équations ci-dessus qui sont représentatives du comportement du moteur électrique 31.

En parallèle ou après que la température T du moteur ait été estimée, le dispositif 8 d'estimation de la vitesse angulaire estime la vitesse angulaire ω du moteur. Le dispositif d'estimation 9 du couple de sortie du moteur estime le couple de sortie $M_L$ du moteur. Les équations (2) et (5) ci-dessus sont par exemple utilisées pour estimer la vitesse angulaire ω du moteur et le couple de sortie $M_L$ du moteur, sachant que la résistance ohmique R, la constante K du moteur, la tension d'alimentation u du moteur, et l'intensité d'alimentation i du moteur sont alors connues.

Une fois que la vitesse angulaire ω du moteur et le couple de sortie $M_L$ du moteur ont été estimés, le dispositif de commande 4 établit un premier coefficient correctif $\alpha_1$ de température du moteur et un deuxième coefficient correctif $\alpha_2$ de température du moteur.

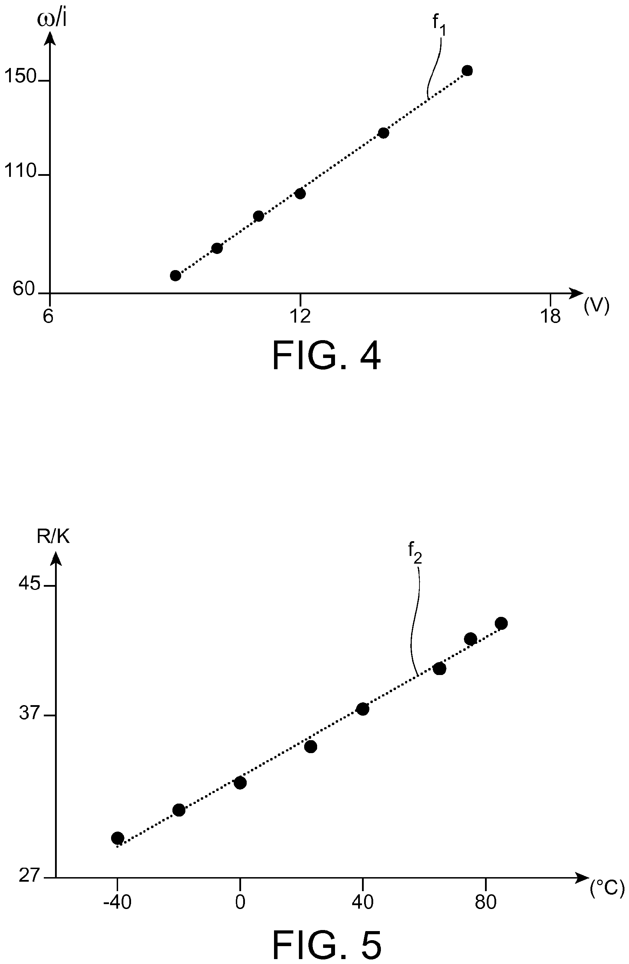

En référence plus spécifiquement à la figure 4, le premier coefficient correctif $\alpha_1$ est établi à partir d'une première fonction $f_1$. La première fonction $f_1$ est conçue pour être sensiblement linéaire. Elle relie le rapport de la vitesse angulaire ω du moteur sur l'intensité i qui alimente le moteur 31 en fonction de la tension d'alimentation u du moteur. Le premier coefficient correctif $\alpha_1$ est utilisé ultérieurement pour estimer l'effort de freinage Fs qui est exercé par le frein 1, en tenant compte de l'influence de la température du moteur 31 sur l'effort de freinage Fs.

En référence plus spécifiquement à la figure 5, le deuxième coefficient correctif $\alpha_2$ est établi à partir d'une deuxième fonction $f_2$. La deuxième fonction $f_2$ est conçue pour être sensiblement linéaire. Elle relie le rapport de la résistance ohmique R du moteur sur la constante K du moteur en fonction de la température T du moteur. Le deuxième coefficient correctif $\alpha_2$ est utilisé ultérieurement pour estimer l'effort de freinage Fs qui est exercé par le frein 1, en tenant compte de l'influence de la température T du moteur 31 sur l'effort de freinage Fs.

En référence à nouveau à la figure 3, le dispositif 20 d'estimation de déplacement du piston est configuré pour estimer le déplacement S du piston à partir de la vitesse angulaire ω du moteur. Le déplacement S du piston dépend du taux de réduction du dispositif de transmission 32 et du taux de réduction des éléments de transmission qui sont logés dans l'étrier 2. Étant donné que le déplacement S du piston dépend peu de la température T du moteur, le déplacement S du piston est estimé sans coefficient correctif lié à la température du moteur tel que le premier coefficient correctif $\alpha_1$ ou le deuxième coefficient correctif $\alpha_2$, dans le mode de réalisation représenté. Un tel dispositif 20 d'estimation de déplacement du piston est connu en soi.

Le dispositif d'estimation 22 d'estimation de l'effort de freinage est configuré pour estimer l'effort de freinage Fs qui est exercé par le frein 1 sur la roue de véhicule correspondante. Dans le mode de réalisation représenté, l'effort de freinage Fs correspond à un effort de serrage exercé par les patins (non représentés) sur le disque 12. L'effort de freinage Fs est estimé à partir de la vitesse angulaire ω du moteur, du couple de sortie $M_L$ du moteur et de la température T du moteur. La température T du moteur est notamment prise en compte par l'intermédiaire du premier coefficient correctif $\alpha_1$ et du deuxième coefficient correctif $\alpha_2$, pour estimer l'effort de freinage Fs.

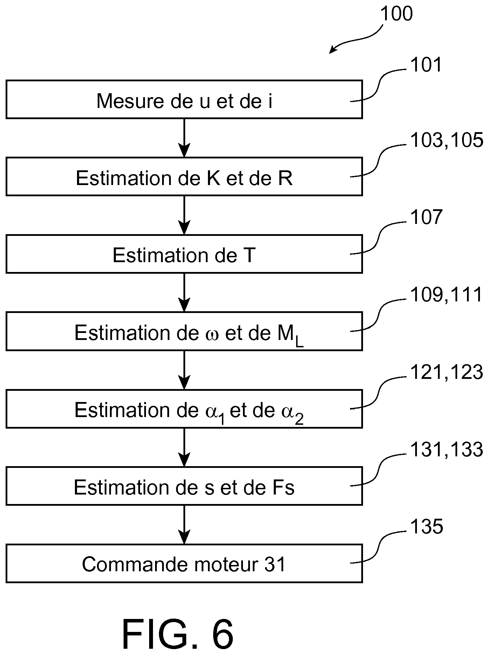

Le procédé de commande du frein 1 est illustré en référence conjointe aux figures 3 et 6. Le procédé de commande 100 s'effectue par l'intermédiaire du dispositif de commande 4 qui a été décrit ci-dessus. Le procédé de commande 100 vise à commander le fonctionnement du moteur électrique 31 de l'actionneur à partir de la température estimée T du moteur, à l'étape 135.

Le procédé de commande 100 comprend une étape initiale 101 de détermination de la tension d'alimentation u du moteur 31, de l'intensité d'alimentation i du moteur, et du moment d'inertie J du moteur. Le moment d'inertie J du moteur est connu, par exemple d'après les spécifications du moteur électrique 31. La tension d'alimentation u et l'intensité d'alimentation i sont mesurées à différents instants, par exemple à intervalles réguliers.

Le procédé de commande 100 se poursuit par une étape 103 d'estimation de la constante K du moteur à partir de la tension d'alimentation u du moteur et de l'intensité d'alimentation i du moteur qui ont été mesurées. En parallèle, le procédé de commande 100 comprend une étape 105 d'estimation de la résistance ohmique R du moteur à partir de la tension d'alimentation u du moteur et de l'intensité i d'alimentation du moteur.

Le procédé de commande 100 comprend ensuite une étape 107 d'estimation de la température T du moteur électrique, à partir de la résistance ohmique R et de la constante K du moteur, par l'intermédiaire du dispositif 7 d'estimation de température. L'étape 107 d'estimation de la température T est également appelée procédé d'estimation de la température T du moteur dans le présent document.

Le procédé de commande 100 comprend une étape 109 d'estimation de la vitesse angulaire $\omega$ du moteur, à partir de la tension d'alimentation u du moteur, de l'intensité d'alimentation i du moteur, du moment d'inertie J du moteur, de la résistance ohmique R du moteur, et de la constante K du moteur. En parallèle, le procédé de commande 100 comprend une étape 111 d'estimation du couple de sortie $M_L$ du moteur, à partir de la tension d'alimentation u du moteur, de l'intensité d'alimentation i du moteur, du moment d'inertie J du moteur, de la résistance ohmique R du moteur, et de la constante K du moteur.

Le procédé de commande 100 comprend une étape 131 d'estimation du déplacement S du piston, à partir de la vitesse angulaire $\omega$ du moteur, par l'intermédiaire du dispositif 20 d'estimation de déplacement du piston. En parallèle, le procédé de commande 100 comprend une étape 133 d'estimation de l'effort de freinage Fs, à partir de la vitesse angulaire $\omega$ du moteur, du couple de sortie $M_L$ du moteur et de la température T du moteur, par l'intermédiaire du dispositif 22 d'estimation d'effort de freinage.

Le procédé de commande 100 se termine par l'étape 135 de commande du fonctionnement du moteur 31. Le dispositif de commande 4 commande notamment la tension d'alimentation u du moteur et l'intensité d'alimentation i du moteur. Le moteur 31 tourne alors avec une vitesse angulaire $\omega$ et produit un couple de sortie $M_L$, pour que le piston 11 se déplace d'une valeur S de consigne et que le frein 1 exerce un effort de freinage Fs selon une consigne de freinage.

Bien entendu, diverses modifications peuvent être apportées par l'homme du métier à l'invention qui vient d'être décrite sans sortir du cadre de l'exposé de l'invention. L'invention est limitée uniquement par la portée des revendications annexées.

Dans un mode de réalisation non représenté, le frein 1 est un frein à tambour qui comprend l'actionneur électromécanique 3 et le dispositif de commande 4 de l'actionneur.

Dans un autre mode de réalisation non représenté, le frein 1 est un frein à étrier fixe au lieu d'être un frein à étrier flottant.

Le déplacement s du piston 11 peut être estimé par le dispositif de commande 4 à partir de la température T du moteur 31.

En variante ou en plus, la constante K du moteur, la résistance ohmique R du moteur, et/ou la vitesse angulaire $\omega$ du moteur sont mesurées, au lieu d'être estimées à partir de la tension d'alimentation u et de l'intensité d'alimentation i du moteur.

Le dispositif de commande 4 peut commander le fonctionnement du moteur 31 au moyen d'autres paramètres, en prenant par exemple davantage en compte l'usure du moteur 31 ou du dispositif de transmission 32 et/ou les frottements.

D'autres types de coefficients correctifs que le premier coefficient correctif $\alpha_1$ et le deuxième coefficient correctif $\alpha_2$ peuvent être utilisés.

La première fonction $f_1$ et la deuxième fonction $f_2$ peuvent être conçues chacune de manière non linéaire, par exemple polynomiales, pour être plus précises.

## NOMENCLATURE EN REFERENCE AUX FIGURES

1 : frein à disque
2 : étrier
3 : actionneur électromécanique
4 : dispositif de commande
5 : dispositif d'estimation de la résistance du moteur
6 : dispositif d'estimation de la constante du moteur
8 : dispositif d'estimation de la vitesse angulaire du moteur
9 : dispositif d'estimation du couple du moteur
11 : piston
12 : disque
20 : dispositif d'estimation de déplacement du piston
22 : dispositif d'estimation de l'effort de freinage
31 : moteur électrique
32 : dispositif de transmission
34 : boitier d'actionneur
T : température du moteur électrique
K : constante du moteur
R : résistance du moteur
L : inductance du moteur
u : tension d'alimentation du moteur
i : intensité d'alimentation du moteur
J : moment d'inertie du moteur
$\omega$ : vitesse angulaire du moteur

$M_L$ : couple de sortie du moteur

$M_c$ : couple de chargement du moteur

$M_F$ : couple de frottement du moteur

S : déplacement du piston

Fs : effort de freinage exercé par le frein

$f_1$ : première fonction

$\alpha_1$ : premier coefficient correctif de température du moteur

$f_2$ : deuxième fonction

$\alpha_2$ : deuxième coefficient correctif de température du moteur

## Revendications

1. Procédé de commande d'un frein (1) de véhicule, le frein (1) comprenant un actionneur électromécanique (3) qui comporte un moteur électrique (31), le procédé comprenant :

la commande de l'actionneur (3) à partir de la température (T) du moteur, la température (T) du moteur étant estimée à partir de la constante du moteur (K) et de la résistance ohmique (R) du moteur,

**caractérisé en ce que** le procédé de commande du frein (1) comprend une étape de détermination (121) d'un premier coefficient correctif ($\alpha_1$) de température (T) du moteur, à partir d'une première fonction ($f_1$) qui est représentative d'un rapport d'une vitesse angulaire ($\omega$) du moteur sur l'intensité d'alimentation (i) du moteur en fonction de la tension d'alimentation (u) du moteur, et/ou

le procédé de commande du frein (1) comprend une étape de détermination (123) d'un deuxième coefficient correctif ($\alpha_2$) de température (T) du moteur, à partir d'une deuxième fonction ($f_2$) qui est représentative d'un rapport de la résistance ohmique (R) du moteur sur la constante du moteur (K) en fonction de la température (T) du moteur.

2. Procédé de commande selon la revendication 1, comprenant la commande du moteur (31) pour que le frein (1) exerce un effort de freinage (Fs) selon une consigne de freinage, dans lequel l'effort de freinage (Fs) exercé par le frein (1) est estimé à partir de la température (T) du moteur.

3. Procédé de commande selon la revendication 2, dans lequel l'effort de freinage (Fs) exercé par le frein (1) est estimé à partir du premier coefficient correctif ($\alpha_1$) et/ou du deuxième coefficient correctif ($\alpha_2$).

4. Procédé de commande selon l'une quelconque des revendications 1 à 3, dans lequel la première fonction ($f_1$) et/ou la deuxième fonction ($f_2$) sont conçues pour être linéaires.

5. Procédé de commande selon l'une quelconque des revendications 1 à 4, dans lequel la constante du moteur (K) et/ou la résistance ohmique (R) du moteur sont estimées à partir de la tension d'alimentation (u) du moteur et de l'intensité d'alimentation (i) du moteur.

6. Dispositif de commande (4) d'un frein (1) de véhicule, le frein (1) comprenant un actionneur électromécanique (3) qui comporte un moteur électrique (31), le dispositif de commande (4) étant configuré pour commander l'actionneur électromécanique (3) à partir de la température (T) du moteur électrique de l'actionneur, la température (T) du moteur étant estimée à partir de la constante du moteur (K) et de la résistance ohmique (R) du moteur,

**caractérisé en ce que** le dispositif de commande (4) est configuré pour déterminer un premier coefficient correctif ($\alpha_1$) de température (T) du moteur, à partir d'une première fonction ($f_1$) qui est représentative d'un rapport d'une vitesse angulaire ($\omega$) du moteur sur l'intensité d'alimentation (i) du moteur en fonction de la tension d'alimentation (u) du moteur, et/ou

le dispositif de commande (4) est configuré pour déterminer un deuxième coefficient correctif ($\alpha_2$) de température (T) du moteur, à partir d'une deuxième fonction ($f_2$) qui est représentative d'un rapport de la résistance ohmique (R) du moteur sur la constante du moteur (K) en fonction de la température (T) du moteur.

7. Dispositif de commande (4) selon la revendication 6, dans lequel la première fonction ($f_1$) et/ou la deuxième fonction ($f_2$) sont conçues pour être linéaires.

8. Dispositif de commande (4) selon l'une quelconque des revendications précédentes 6 à 7, dans lequel la constante du moteur (K) et/ou la résistance ohmique (R) du moteur sont estimées à partir de la tension d'alimentation (u) du moteur et de l'intensité d'alimentation (i) du moteur.

9. Frein (1) pour véhicule motorisé, le frein (1) comprenant un actionneur électromécanique (3) et un dispositif de commande (4) selon l'une quelconque des revendications précédentes 6 à 8, le dispositif de commande (4) étant configuré pour commander l'actionneur (3) du frein (1).

10. Frein (1) selon la revendication 9, dans lequel le dispositif de commande (4) est configuré pour commander le moteur (31) pour que le frein (1) exerce un effort de freinage (Fs) selon une consigne de freinage, l'effort de freinage (Fs) exercé par le frein (1) étant estimé à partir de la température (T) du moteur.

11. Frein (1) selon l'une quelconque des revendications 9 et 10, dans lequel l'effort de freinage (Fs) exercé par le frein (1) est estimé à partir du premier coefficient correctif (ai) et/ou du deuxième coefficient correctif ($\alpha_2$).

**Patentansprüche**

1. Verfahren zur Steuerung einer Fahrzeugbremse (1), wobei die Bremse (1) einen elektromechanischen Aktor (3) umfasst, der einen Elektromotor (31) aufweist, das Verfahren umfassend:

   das Steuern des Aktors (3) anhand der Temperatur (T) des Motors, wobei die Temperatur (T) des Motors anhand der Konstante des Motors (K) und des ohmschen Widerstands (R) des Motors geschätzt wird,
   **dadurch gekennzeichnet, dass** das Verfahren zur Steuerung der Bremse (1) einen Schritt des Bestimmens (121) eines ersten Korrekturkoeffizienten ($\alpha_1$) einer Temperatur (T) des Motors anhand einer ersten Funktion ($f_1$) umfasst, die für ein Verhältnis einer Winkelgeschwindigkeit ($\omega$) des Motors zur Versorgungsstärke (i) des Motors je nach der Versorgungsspannung (u) des Motors repräsentativ ist, und/oder
   das Verfahren zur Steuerung der Bremse (1) einen Schritt des Bestimmens (123) eines zweiten Korrekturkoeffizienten ($\alpha_2$) einer Temperatur (T) des Motors anhand einer zweiten Funktion ($f_2$) umfasst, die für ein Verhältnis des ohmschen Widerstands (R) des Motors zur Konstante des Motors (K) je nach der Temperatur (T) des Motors repräsentativ ist.

2. Steuerungsverfahren nach Anspruch 1, umfassend das Steuern des Motors (31), damit die Bremse (1) eine Bremskraft ($F_s$) gemäß einem Bremssollwert ausübt, wobei die Bremskraft ($F_s$), die von der Bremse (1) ausgeübt wird, anhand der Temperatur (T) des Motors geschätzt wird.

3. Steuerungsverfahren nach Anspruch 2, wobei die Bremskraft ($F_s$), die von der Bremse (1) ausgeübt wird, anhand des ersten Korrekturkoeffizienten ($\alpha_1$) und/oder des zweiten Korrekturkoeffizienten ($\alpha_2$) geschätzt wird.

4. Steuerungsverfahren nach einem der Ansprüche 1 bis 3, wobei die erste Funktion ($f_1$) und/oder die zweite Funktion ($f_2$) so ausgelegt sind, dass sie linear sind.

5. Steuerungsverfahren nach einem der Ansprüche 1 bis 4, wobei die Konstante des Motors (K) und/oder der ohmsche Widerstand (R) des Motors anhand der Versorgungsspannung (u) des Motors und der Versorgungsstärke (i) des Motors geschätzt werden.

6. Vorrichtung zur Steuerung (4) einer Fahrzeugbremse (1), wobei die Bremse (1) einen elektromechanischen Aktor (3) umfasst, der einen Elektromotor (31) aufweist,

   wobei die Steuerungsvorrichtung (4) dazu ausgebildet ist, den elektromechanischen Aktor (3) anhand der Temperatur (T) des Elektromotors des Aktors zu steuern, wobei die Temperatur (T) des Motors anhand der Konstante des Motors (K) und des ohmschen Widerstands (R) des Motors geschätzt wird,
   **dadurch gekennzeichnet, dass** die Steuerungsvorrichtung (4) dazu ausgebildet ist, einen ersten Korrekturkoeffizienten ($\alpha_1$) einer Temperatur (T) des Motors anhand einer ersten Funktion ($f_1$) zu bestimmen, die für ein Verhältnis einer Winkelgeschwindigkeit ($\omega$) des Motors zur Versorgungsstärke (i) des Motors je nach der Versorgungsspannung (u) des Motors repräsentativ ist, und/oder
   die Steuerungsvorrichtung (4) dazu ausgebildet ist, einen zweiten Korrekturkoeffizienten ($\alpha_2$) einer Temperatur (T) des Motors anhand einer zweiten Funktion ($f_2$) zu bestimmen, die für ein Verhältnis des ohmschen Widerstands (R) des Motors zur Konstante des Motors (K) je nach der Temperatur (T) des Motors repräsentativ ist.

7. Steuerungsvorrichtung (4) nach Anspruch 6, wobei die erste Funktion ($f_1$) und/oder die zweite Funktion ($f_2$) so ausgelegt sind, dass sie linear sind.

8. Steuerungsvorrichtung (4) nach einem der vorhergehenden Ansprüche 6 bis 7, wobei die Konstante des Motors (K) und/oder der ohmsche Widerstand (R) des Motors anhand der Versorgungsspannung (u) des Motors und der Versorgungsstärke (i) des Motors geschätzt werden.

9. Bremse (1) für motorisiertes Fahrzeug, wobei die Bremse (1) einen elektromechanischen Aktor (3) und eine Steuerungsvorrichtung (4) nach einem der vorhergehenden Ansprüche 6 bis 8 umfasst, wobei die Steuerungsvorrichtung (4) dazu ausgebildet ist, den Aktor (3) der Bremse (1) zu steuern.

10. Bremse (1) nach Anspruch 9, wobei die Steuerungsvorrichtung (4) dazu ausgebildet ist, den Motor (31) zu steuern, damit die Bremse (1) eine Bremskraft ($F_S$) gemäß einem Bremssollwert ausübt, wobei die Bremskraft ($F_s$), die von der Bremse (1) ausgeübt wird, anhand der Temperatur (T) des Motors geschätzt wird.

**11.** Bremse (1) nach einem der Ansprüche 9 und 10, wobei die Bremskraft ($F_S$), die von der Bremse (1) ausgeübt wird, anhand des ersten Korrekturkoeffizienten ($\alpha_1$) und/oder des zweiten Korrekturkoeffizienten ($\alpha_2$) geschätzt wird.

**Claims**

**1.** A method for controlling a vehicle brake (1), the brake (1) comprising an electromechanical actuator (3) which includes an electric motor (31), the method comprising:

controlling the actuator (3) from the temperature (T) of the motor, wherein the temperature (T) of the motor is estimated from the motor constant (K) and the ohmic resistance (R) of the motor, **characterised in that** the method for controlling the brake (1) comprises a step of determining (121) a first temperature (T) corrective coefficient ($\alpha_1$) of the motor, on the basis of a first function ($f_1$) which is representative of a ratio of an angular speed ($\omega$) of the motor to the supply current (i) of the motor as a function of the supply voltage (u) of the motor, and/or the method for controlling the brake (1) comprises a step of determining (123) a second temperature (T) corrective coefficient ($\alpha_2$) of the motor, on the basis of a second function ($f_2$) which is representative of a ratio of the ohmic resistance (R) of the motor to the motor constant (K) as a function of the temperature (T) of the motor.

**2.** The control method according to claim 1, comprising controlling the motor (31) so that the brake (1) exerts a braking force (Fs) according to a braking setpoint, wherein the braking force ($F_S$) exerted by the brake (1) is estimated from the temperature (T) of the motor.

**3.** The control method according to claim 2, wherein the braking force ($F_S$) exerted by the brake (1) is estimated from the first corrective coefficient ($\alpha_1$) and/or from the second corrective coefficient ($\alpha_2$).

**4.** The control method according to any one of claims 1 to 3, wherein the first function ($f_1$) and/or the second function ($f_2$) are configured to be linear.

**5.** The control method according to any one of claims 1 to 4, wherein the motor constant (K) and/or the ohmic resistance (R) of the motor are estimated from the supply voltage (u) of the motor and the supply current (i) of the motor.

**6.** A device (4) for controlling a vehicle brake (1), the brake (1) comprising an electromechanical actuator (3) which includes an electric motor (31),

wherein the control device (4) is configured to control the electromechanical actuator (3) from the temperature (T) of the electric motor of the actuator, wherein the temperature (T) of the motor is estimated from the motor constant (K) and the ohmic resistance (R) of the motor, **characterised in that** the control device (4) is configured to determine a first temperature (T) corrective coefficient ($\alpha_1$) of the motor, on the basis of a first function ($f_1$) which is representative of a ratio of an angular speed ($\omega$) of the motor to the supply current (i) of the motor as a function of the supply voltage (u) of the motor, and/or the control device (4) is configured to determine a second temperature (T) corrective coefficient ($\alpha_2$) of the motor, on the basis of a second function ($f_2$) which is representative of a ratio of the ohmic resistance (R) of the motor to the motor constant (K) as a function of the temperature (T) of the motor.

**7.** The control device (4) according to claim 6, wherein the first function ($f_1$) and/or the second function ($f_2$) are configured to be linear.

**8.** The control device (4) according to any one of the preceding claims 6 to 7, wherein the motor constant (K) and/or the ohmic resistance (R) of the motor are estimated from the supply voltage (u) of the motor and the supply current (i) of the motor.

**9.** A brake (1) for a motor vehicle, the brake (1) comprising an electromechanical actuator (3) and a control device (4) according to any one of the preceding claims 6 to 8, wherein the control device (4) is configured to control the actuator (3) of the brake (1).

**10.** The brake (1) according to claim 9, wherein the control device (4) is configured to control the motor (31) so that the brake (1) exerts a braking force (Fs) according to a braking setpoint, wherein the braking force (Fs) exerted by the brake (1) is estimated from the temperature (T) of the motor.

**11.** The brake (1) according to any one of claims 9 and 10, wherein the braking force ($F_S$) exerted by the brake (1) is estimated from the first corrective coefficient ($\alpha_1$) and/or from the second corrective coefficient ($\alpha_2$).

FIG. 1

FIG. 2

$$u = R.i + K.\omega$$

$$J.\frac{d\omega}{dt} = K.i - M_L$$

FIG. 3

FIG. 4

FIG. 5

100

101

Mesure de u et de i

103,105

Estimation de K et de R

107

Estimation de T

109,111

Estimation de $\omega$ et de $M_L$

121,123

Estimation de $\alpha_1$ et de $\alpha_2$

131,133

Estimation de s et de Fs

135

Commande moteur 31

# FIG. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102006052810
- DE 102012205030
- DE 102009001258
- US 20160103430 A